# NEUE EUROPÄISCHE PATENTSCHRIFT

(11) **EP 1 171 298 B2**
(45) Veröffentlichungstag und Bekanntmachung des Hinweises auf die Entscheidung über den Einspruch: **30.11.2011**
(45) Hinweis auf die Patenterteilung: 11.08.2004
(21) Anmeldenummer: 00918866.5
(22) Anmeldetag: 11.04.2000
(51) Int. Cl.: B32B 27/36, B32B 27/32

(54) **STRAHLUNGSHÄRTBARE VERBUNDSCHICHTPLATTE ODER -FOLIE**
RADIATION-CURABLE COMPOSITE BOARD OR FILM
PLAQUE OU FEUILLE COMPOSITE DURCISSABLE PAR RAYONNEMENT

(30) Priorität: 21.04.1999 DE 19917965
(43) Veröffentlichungstag der Anmeldung: 16.01.2002
(73) Patentinhaber: BASF SE, 67056 Ludwigshafen (DE); Daimler AG, 70327 Stuttgart (DE)
(72) Erfinder: KÖNIGER, Rainer, D-67251 Freinsheim (DE); BECK, Erich, D-68526 Ladenburg (DE); GREFENSTEIN, Achim, D-67122 Altrip (DE); SCHWALM, Reinhold, D-67157 Wachenheim (DE); VEEH, Margit, D-89073 Ulm (DE); VOGEL, Claudia, D-70597 Stuttgart (DE); AICHHOLZER, Walter, D-71282 Hemmingen (DE); GRUBER, Thomas, D-89231 Neu-Ulm (DE); HOLDIK, Karl, D-89081 Ulm (DE)
(86) Internationale Anmeldenummer: PCT/EP2000/003221
(87) Internationale Veröffentlichungsnummer: WO 2000/063015

(56) Entgegenhaltungen:
- EP-A- 0 307 918
- EP-A- 0 632 333
- EP-A- 0 850 757
- EP-A- 0 874 027
- EP-A2- 0 324 483
- EP-A2- 0 361 351
- EP-A2- 0 451 680
- DE-C2- 2 927 089

## Beschreibung

Die Erfindung betrifft die Verwendung einer strahlungshärtbaren Verbundschichtplatte oder -folie aus mindestens einer Substratschicht und einer Deckschicht zur Beschichtung von Formteilen, wobei die Verwendung dadurch gekennzeichnet ist, daß die Deckschicht aus einer strahlungshärtbaren Masse mit einer Glasübergangstemperatur oberhalb 40°C besteht bei dem es sich um
i) Polymere mit ethylenisch ungesättigten Gruppen oder
ii) Mischungen von i) mit ethylenisch ungesättigten, niedermolekularen Verbindungen handelt.
.

Desweiteren betrifft die Anmeldung ein Verfahren zur Herstellung der strahlungshärtbaren Verbundschichtplatten oder -folie sowie ein Verfahren zur Herstellung von Formteilen, welche mit dieser Platte oder Folie beschichtet sind.

Aus DE-A-196 28 966 und DE-A-196 54 918 sind Lackfolien bekannt, wobei der Lack eine Glasübergangstemperatur unter 40°C aufweist. Die Härtung muß in zwei Schritten erfolgen. Vor dem Aufkleben der Folie auf Substrate erfolgt eine Teilhärtung, danach die Endhärtung.

Aus EP-A-361 351 ist ebenfalls eine Lackfolie bekannt. Hier erfolgt die Strahlungshärtung der Folie vor dem Aufbringen der Folie auf die zu beschichtenden Formteile.

In DE-A-196 51 350 (O.Z. 47587) werden Verbundschichtplatten und - folien beschrieben, die aus thermoplastischen Materialien bestehen und keine strahlungshärtbare Beschichtung aufweisen.

Nachteilig bei den bisher bekannten strahlungshärtbaren Lackfolien ist, daß die Strahlenhärtung oft in mehreren Schritten erfolgen muß, wie in DE-A-196 28 966 beschrieben ist. Bei einer vollständigen Strahlungshärtung der Folie vor dem Beschichtungsvorgang wird die Folie oft spröde und schwer verformbar, was nachteilig für die weitere Verarbeitung der Folie ist.

Mit bisher bekannten strahlungshärtbaren Folien haben die beschichteten Formteile oft eine mangelnde Kratzfestigkeit und eine mangelnde Elastizität bei mechanischen Einwirkungen. Aufgabe der vorliegenden Erfindung waren daher strahlungshärtbare Verbundschichtplatten oder -folien, welche sich leicht verarbeiten und mit möglichst einfachen Verfahren zur Beschichtung von Formteilen verwenden lassen. Die beschichteten Formteile sollen gute mechanische Eigenschaften, gute Beständigkeiten gegen äußere Einflüsse, z.B. eine gute Witterungsbeständigkeit aufweisen und insbesondere gegen mechanische Einwirkungen stabil sein, wie z.B. eine gute Kratzfestigkeit haben und eine hohe Elastizität aufweisen.

Demgemäß wurden die eingangs definierte strahlungshärtbare Verbundschichtplatte oder -folie, im nachfolgenden kurz Folie genannt, gefunden. Gefunden wurden auch Verfahren zur Beschichtung von Formteilen mit der Folie und die beschichteten Formteile.

Die Folie besteht zwingend aus einer Substratschicht und einer Deckschicht, die auf die Substratschicht direkt oder, falls weitere zwischenschichten vorhanden sind, indirekt aufgebracht ist.

### Deckschicht

Die Deckschicht ist strahlungshärtbar. Als Deckschicht findet daher eine strahlungshärtbare Masse Verwendung, die radikalisch oder ionisch härtbare Gruppen (kurz härtbare Gruppen) enthält. Bevorzugt sind radikalisch härtbare Gruppen.

Bevorzugt ist die strahlungshärtbare Masse transparent. Auch nach erfolgter Härtung ist die Deckschicht bevorzugt transparent d.h. es handelt sich um eine Klarlackschicht.

Wesentlicher Bestandteil der strahlungshärtbaren Massen ist das Bindemittel, welches durch Filmbildung die Deckschicht ausbildet.

Bei den strahlungshärtbaren Masse handelt es sich um ein Bindemittel ausgewählt aus
i) Polymere mit ethylenisch ungesättigten Gruppen
ii) Mischungen von i) mit ethylenisch ungesättigten, niedermolekularen Verbindungen.

zu i)
   Als Polymere geeignet sind z.B. Polymere von ethylenisch ungesättigten Verbindungen, aber auch Polyester, Polyether, Polycarbonate, Polyepoxide oder Polyurethane.
   In Betracht kommen ungesättigte Polyesterharze, welche im wesentlichen aus Polyolen, insbesondere Diolen, und Polycarbonsäure, insbesondere Dicarbonsäure, bestehen, wobei eine der Veresterungskomponenten eine copolymerisierbare, ethylenisch ungesättigte Gruppe enthält. Z.B. handelt es sich dabei um Maleinsäure, Fumarsäure oder Maleinsäureanhydrid.
   Bevorzugt sind Polymere von ethylenisch ungesättigten Verbindungen, wie sie insbesondere durch radikalische Polymerisation erhalten werden.
   Bei den radikalisch polymerisierten Polymere handelt es sich insbesondere um Polymere, die zu mehr als 40 Gew.-%, besonders bevorzugt zu mehr als 60 Gew.-% aus Acrylmonomeren, insbesondere C₁-C₈-, bevorzugt C₁-C₄-Alkyl(meth)acrylaten aufgebaut sind. Als ethylenisch ungesättigte Gruppen enthalten die Polymeren insbesondere (Meth)acrylgruppen. Diese könne z.B. durch Umsetzung von (Meth)acrylsäure mit Epoxidgruppen im Polymer (z.B. durch Mitverwendung von Glycidyl(meth)acrylat als Comonomer) an das Polymer gebunden sein.
   Bevorzugt sind ebenfalls Polyurethane. Diese enthalten bevorzugt als ungesättigte Gruppen ebenfalls (Meth)acrylgruppen, die z.B. durch Umsetzung von Hydroxyalkyl(meth)acrylaten mit Isocyanatgruppen an das Polyurethan gebunden sind.
   Die Polymere i) als solche sind thermoplastisch verarbeitbar.
ii)
   Die ungesättigten Polymere i) können auch in Mischungen mit ethylenisch ungesättigten, niedermolekularen Verbindungen verwendet werden.
   Als niedermolekulare Verbindungen werden in diesem Zusammenhang Verbindungen mit einem zahlenmittleren Molekulargewicht unter 2000 g/mol verstanden (bestimmt durch Gelpermeationschromatographie mit Polystyrol als Standard).
   In Betracht kommen z.B. radikalisch polymerisierbare Verbindungen mit nur einer ethylenisch ungesättigten, copolymerisierbaren Gruppe.
   Genannt seien z.B. C₁-C₂₀-Alkyl (meth) acrylate, Vinylaromaten mit bis zu 20 C-Atomen, Vinylester von bis zu 20 C-Atomen enthaltenden Carbonsäuren, ethylenisch ungesättigte Nitrile, Vinylether von 1 bis 10 C-Atome enthaltenden Alkoholen und aliphatischen Kohlenwasserstoffen mit 2 bis 20, bevorzugt 2 bis 8 C-Atomen und 1 oder 2 Doppelbindungen.
   Als (Meth)acrylsäurealkylester bevorzugt sind solche mit einem C₁-C₁₀-Alkylrest, wie Methylmethacrylat, Methylacrylat, n-Butylacrylat, Ethylacrylat und 2-Ethylhexylacrylat.
   Insbesondere sind auch Mischungen der (Meth)acrylsäurealkylester geeignet.
   Vinylester von Carbonsäuren mit 1 bis 20 C-Atomen sind z.B. Vinyllaurat, -stearat, Vinylpropionat und Vinylacetat.
   Als vinylaromatische Verbindungen kommen z.B. Vinyltoluol, α-Butylstyrol, 4-n-Butylstyrol, 4-n-Decylstyrol und vorzugsweise Styrol in Betracht.
   Beispiele für Nitrile sind Acrylnitril und Methacrylnitril.
   Geeignete Vinylether sind z.B. Vinylmethylether, Vinylisobutylether, Vinylhexyl- und -octylether.
   Als nicht aromatische Kohlenwasserstoffe mit 2 bis 20, bevorzugt 2 bis 8 C-Atomen und eine oder zwei olefinischen Doppelbindungen seien Butadien, Isopren, sowie Ethylen, Propylen und Isobutylen genannt.
   In Betracht kommen bevorzugt, radikalisch polymerisierbare Verbindungen mit mehreren ethylenisch ungesättigten Gruppen.
   Insbesondere handelt es sich hierbei um (Meth)acrylatverbindungen, bevorzugt sind jeweils die Acrylatverbindungen, d.h. die Derivate der Acrylsäure.
   Bevorzugte (Meth)acrylat-Verbindungen enthalten 2 bis 20, bevorzugt 2 bis 10 und ganz besonders bevorzugt 2 bis 6 copolymerisierbare, ethylenisch ungesättigte Doppelbindungen.
   Als (Meth)acrylatverbindungen genannt seien (Meth)acrylsäureester und insbesondere Acrylsäureester von mehrfunktionellen Alkoholen, insbesondere solchen, die neben den Hydroxylgruppen keine weiteren funktionellen Gruppen oder allenfalls Ethergruppen enthalten. Beispiele solcher Alkohole sind z.B. bifunktionelle Alkohole, wie Ethylenglykol, Propylenglykol, und deren höher kondensierte Vertreter, z.B. wie Diethylenglykol, Triethylenglykol, Dipropylenglykol, Tripropylenglykol etc., Butandiol, Pentandiol, Hexandiol, Neopentylglykol, alkoxylierte phenolische Verbindungen, wie ethoxylierte bzw. propoxylierte Bisphenole, Cyclohexandimethanol, trifunktionelle und höherfunktionelle Alkohole, wie Glycerin, Trimethylolpropan, Butantriol, Trimethylolethan, Pentaerythrit, Ditrimethylolpropan, Dipentaerythrit, Sorbit, Mannit und die entsprechenden alkoxylierten, insbesondere ethoxy- und propoxylierte Alkohole.
   Die Alkoxylierungsprodukte sind in bekannter Weise durch Umsetzung der vorstehenden Alkohole mit Alkylenoxiden, insbesondere Ethylen- oder Propylenoxid, erhältlich. Vorzugsweise beträgt der Alkoxylierungsgrad je Hydroxylgruppe 0 bis 10, d.h. 1 mol Hydroxylgruppe kann vorzugsweise mit bis zu 10 mol Alkylenoxiden alkoxyliert sein.
   Als (Meth)acrylatverbindungen seien weiterhin Polyester(meth)acrylate genannt, wobei es sich um die (Meth)Acrylsäureester von Polyesterolen handelt.
   Als Polyesterole kommen z.B. solche in Betracht, wie sie durch Veresterung von Polycarbonsäuren, vorzugsweise Dicarbonsäuren, mit Polyolen, vorzugsweise Diolen, hergestellt werden können. Die Ausgangsstoffe für solche hydroxylgruppenhaltige Polyester sind dem Fachmann bekannt. Bevorzugt können als Dicarbonsäuren Bernsteinsäure, Glutarsäure, Adipinsäure, Sebacinsäure, o-Phthalsäure, deren Isomere und Hydrierungsprodukte sowie veresterbare Derivate, wie Anhydride oder Dialkylester der genannten Säuren eingesetzt werden. Als Polyole kommen die oben genannten Alkohole, vorzugsweise Ethylenglykol, Propylenglykol-1,2 und -1,3, Butandiol-1,4, Hexandiol-1,6, Neopentylglykol, Cyclohexandimethanol sowie Polyglykole vom Typ des Ethylenglykols und Propylenglykols in Betracht.
   Polyester(meth)acrylate können in mehreren Stufen oder auch einstufig, wie z.B. in EP 279 303 beschrieben, aus Acrylsäure, Polycarbonsäure, Polyol hergestellt werden.

Wesentliches Merkmal des Bindemittels ist, daß die Glasübergangstemperatur (Tg) des Bindemittels oberhalb 40°C, vorzugsweise oberhalb 50°C, besonders bevorzugt oberhalb 60°C liegt. Im allgemeinen überschreitet die Tg nicht einen Wert von 130°C. (Die Angaben beziehen sich auf das Bindemittel vor der Strahlungshärtung.)

Die Glasübergangstemperatur Tg des Bindemittels läßt sich mit der DSC-Methode (Differential Scanning Calorimetry) gemäß ASTM 3418/82 bestimmen.

Bevorzugt beträgt die Menge der härtbaren d.h. ethylenisch ungesättigten Gruppen 0,001 bis 0,2 Mol, besonders bevorzugt 0,005 bis 0,15 Mol, ganz besonders bevorzugt 0,01 bis 0,1 Mol pro 100 g des Bindemittels (fest), d.h. ohne Wasser oder sonstige Lösemittel).

Bevorzugt hat das Bindemittel eine Viskosität von 0,02 bis 100 Pas bei 140°C (bestimmt im Rotationsviskosimeter)

Die strahlungshärtbaren Massen können weitere Bestandteile enthalten. Genannt seien insbesondere Photoinitiatoren, Verlaufsmittel und Stabilisatoren. Bei Anwendungen im Außenbereich, d.h. für Beschichtungen, welche dem Tageslicht direkt ausgesetzt sind, enthalten die Massen insbesondere UV-Absorber und Radikalfänger.

UV Absorber wandeln UV-Strahlung in Wärmeenergie um. Bekannte UV-Absorber sind Hydroxybenzophenone, Benzotriazole, Zimtsäureester und Oxalanilide.

Radikalfänger binden intermedär gebildete Radikale. Bedeutende Radikalfänger sind sterisch gehinderte Amine, welche als HALS (Hindered Amine Light Stabilizers) bekannt sind.

Für Außenanwendungen beträgt der Gehalt an UV-Absorbern und Radikalfängern insgesamt vorzugsweise 0,1 bis 5 Gew.-Teile, besonders bevorzugt 0,5 bis 4 Gew.-Teile, bezogen auf 100 Gew.-Teile der strahlungshärtbaren Verbindungen.

Im übrigen kann die strahlungshärtbare Masse neben strahlungshärtbaren Verbindungen auch noch Verbindungen enthalten, die durch andere chemische Reaktionen zur Härtung beitragen. In Betracht kommen z.B. Polyisocyanate, welche mit Hydroxyl- oder Amingruppen vernetzen.

Die strahlungshärtbare Masse kann wasser- und lösemittelfrei, als Lösung oder als Dispersion vorliegen.

Bevorzugt sind wasser- und lösungsmittelfreie strahlungshärtbare Massen oder wäßrige Lösungen oder wäßrige Dispersionen.

Besonders bevorzugt sind wasser- und lösungsmittelfreie, strahlungshärtbare Massen.

Die strahlungshärtbare Masse ist thermoplastisch verformbar und insbesondere extrudierbar.

Die vorstehenden strahlungshärtbaren Massen bilden die Deckschicht. Die Schichtdicke (nach Trocknung und Härtung) beträgt bevorzugt 10 bis 100 µm.

### Substratschicht

Die Substratschicht dient als Träger und soll eine dauerhaft hohe Zähigkeit des Gesamtverbundes gewährleisten.

Die Substratschicht besteht vorzugsweise aus einem thermoplastischen Polymer, insbesondere Polymethylmethacrylate, Polybutylmethacrylate, Polyurethane, Polyethylenterephthalate, Polybutylenterephthalate, Polyvinylidenfluride, Polyvinylchloride, Polyester, Polyolefine, Polyamide, Polycarbonate (PC) Acrylnitrilbutadienstyrolpolymere (ABS), Acrylstryolacrylnitrilcopolymere (ASA), Acrylnitrilethylenpropylendienstryolcopolymere (A-EPDM), Polyetherimide, Polyetherketone, Polyphenylensulfide, Polyphenylenether oder deren Mischungen.

Bevorzugt ist ASA, insbesondere gemäß DE 19 651 350 und der Blend ASA/PC. Bevorzugt ist ebenfalls Polymethylmethacrylat (PMMA) oder schlagzähmodifiziertes PMMA.

Die Schichtdicke beträgt vorzugsweise 50 µm bis zu 5 mm. Besonders bevorzugt, vor allem, wenn die Substratschicht hinterspritzt wird, ist 100 bis 1000 µm, insbesondere 100 bis 500 µm.

Das Polymer der Substratschicht kann Additive enthalten. Insbesondere kommen Füllstoffe oder Fasern in Betracht. Die Substratschicht kann auch eingefärbt sein und so gleichzeitig als farbgebende Schicht dienen.

### Weitere Schichten

Die Folie kann neben der Deckschicht und der Substratschicht weitere Schichten enthalten.

In Betracht kommen z.B. farbgebende Zwischenschichten oder weiter Schichten aus thermoplastischem Material (thermoplastische Zwischenschichten), welche die Folie verstärken oder als Trennschichten dienen.

Thermoplastische Zwischenschichten können aus den oben unter Substratschicht aufgeführten Polymeren bestehen.

Bevorzugt ist insbesondere Polymethylmethacrylat (PMMA), vorzugsweise schlagzähmodifiziertes PMMA. Genannt sei auch Polyurethan. Farbgebende Schichten können ebenfalls aus den genannten Polymeren bestehen.
Sie enthalten Farbstoffe oder Pigmente welche in der Polymerschicht verteilt sind.

Eine bevorzugte Folie hat z.B. folgenden Schichtaufbau, wobei die alphabetische Reihenfolge der räumlichen Anordnung entspricht:
A) Deckschicht
B) thermoplastische Zwischenschicht (optional)
C) farbgebende Zwischenschicht (optional)
D) Substratschicht
E) Klebstoffschicht (optional)

Auf der rückwertigen Seite (kurz Rückseite) der Substratschicht (d.h. der dem zu beschichtenden Objekt zugewandten Seite) kann eine Klebstoffschicht aufgebraucht sein, falls die Folie auf das Substrat geklebt werden soll.

Auf der transparenten Deckschicht kann eine Schutzschicht, z.B. eine Abziehfolie, die ein unbeabsichtigtes Aushärten verhindert, aufgebracht sein. Die Dicke kann z.B. 50 bis 100 µm betragen. Die Schutzschicht kann z.B. aus Polyethylen oder Polytherephthalat bestehen. Vor der Bestrahlung kann die Schutzschicht entfernt werden.

Die Bestrahlung kann aber auch durch die Schutzschicht erfolgen, dazu muß die Schutzschicht im Wellenlängenbereich der Bestrahlung transparent sein.

Die Gesamtdicke der Folie beträgt vorzugsweise 50 bis 1000 µm.

Herstellung der Verbundplatte oder -folie

Die Herstellung eines Verbundes aus den Schichten B) bis D) kann z.B. durch Coextrusion aller oder einiger der Schichten erfolgen.

Zur Coextrusion werden die einzelnen Komponenten in Extrudern fließfähig gemacht und über spezielle Vorrichtungen so miteinander in Kontakt gebracht, daß die Folien mit der vorstehend beschriebenen Schichtfolge resultieren. Beispielsweise können die Komponenten durch eine Breitschlitzdüse coextrudiert werden. Dieses Verfahren ist in der EP-A2-0 225 500 erläutert. In Ergänzung zu den dort beschriebenen Verfahren kann auch die sogenannte Adapter-Coextrusion eingesetzt werden.

Der Verbund kann nach üblichen Verfahren, z.B. durch Coextrusion, wie vorstehend beschrieben, oder durch Kaschierung der Schichten, z.B. in einem beheizbaren Spalt, hergestellt werden. Zunächst kann so ein Verbund aus den Schichten mit Ausnahme der Deckschicht hergestellt und danach die Deckschicht nach üblichen Verfahren aufgebracht werden.

Die strahlungshärtbare Masse kann in einfacher Weise z.B. durch Gießen, Rollen, Rakeln, Spritzen etc. auf die Substratschicht bzw. den Verbund aufgetragen werden und gegebenenfalls getrocknet werden.

Bevorzugt wird die strahlungshärtbare Masse, d.h. die Deckschicht extrudiert. Gegebenenfalls kann die strahlungshärtbare Masse auch mit einer weiteren oder mehreren weiteren Schichten coextrudiert werden.

Bei der Extrusion (eingeschlossen Coextrusion) der strahlungshärtbaren Massen kann die Herstellung der strahlungshärtbaren Masse durch Mischen der Bestandteile und die Herstellung der Deckschicht in einem Arbeitsgang erfolgen.

Dazu können thermoplastische Bestandteile, im Extruder zunächst aufgeschmolzen werden. Die notwendige Schmelztemperatur hängt vom jeweiligen Polymeren ab. Vorzugsweise nach dem Aufschmelzvorgang können die weiteren Bestandteile, insbesondere strahlungshärtbare, niedermolekulare Verbindungen ii) (siehe oben) zudosiert werden. Die Verbindungen wirken als Weichmacher, so daß sich die Temperatur, bei der die Masse als Schmelze vorliegt, absenkt. Die Temperatur bei Zugabe der strahlungshärtbaren Verbindung muß insbesondere unter einer sogenannten kritischen Temperatur liegen, bei der eine thermische Härtung der strahlungshärtbaren Verbindung erfolgt.

Die kritische Temperatur läßt sich leicht durch eine kalorimetrische Messung, d.h. der Wärmeaufnahme mit steigender Temperatur entsprechend der oben beschriebenen Bestimmung der Glasübergangstemperatur ermitteln.

Die strahlungshärtbare Masse wird dann direkt als Deckschicht auf den vorhandenen Verbund oder, im Falle der Coextrusion, mit Schichten des Verbundes extrudiert. Durch die Extrusion wird die Verbundschichtplatte oder -folie unmittelbar erhalten.

Die Deckschicht ist blockfest, d.h. klebt nicht, und ist strahlenvernetzbar. Die Verbundplatte oder -folie ist thermoelastisch verformbar. Falls gewünscht kann direkt nach der Herstellung der Verbundplatte oder -folie eine Schutzschicht (Schutzfolie) auf die Deckschicht abgelegt werden.

Die Verbundschichtplatte oder -folie hat einen hohen Glanz und gute mechanische Eigenschaften. Rißbildung ist kaum zu beobachten.

Die Dehnungsfähigkeit der Verbundschichtplatte oder -folie beträgt vorzugsweise mindestens 100 %, bezogen auf den nicht gedehnten Zustand (bei 140°C, einer Dicke von 30 µm).

### Verwendungsverfahren

Die Folie kann ohne Teilhärtung (wie in DE-A-19 628 966 beschrieben ist) bis zur späteren Anwendung gelagert werden.

Eine verklebung oder Verschlechterung der anwendungstechnischen Eigenschaften bis zur späteren Anwendung ist nicht oder kaum zu beobachten.
Die Folie wird bevorzugt als Beschichtungsmittel verwendet.

Vorzugsweise erfolgt dabei zunächst die Beschichtung der Substrate und danach die Härtung der Deckschicht durch Strahlung.

Die Beschichtung kann durch Aufkleben der Folie auf die Substrate erfolgen. Die Folie ist dazu auf der Rückseite der Substratschicht vorzugsweise mit der Klebstoffschicht E versehen. Als Substrate eignen sich solche aus Holz, Kunststoff, Metall.

Die Beschichtung kann auch durch Hinterspritzen der Folie erfolgen. Dazu wird die Folie vorzugsweise in einem Tiefziehwerkzeug tiefgezogen und die Rückseite der Substratschicht mit Kunststoffmasse hinterspritzt. Bei der Kunststoffmasse handelt es sich z.B. um Polymere, welche oben bei der Beschreibung der Substratschicht aufgeführt wurden oder z.B. um Polyurethan, insbesondere Polyurethanschaum. Die Polymeren können Additive, insbesondere z.B. Fasern, wie Glasfasern oder Füllstoffe enthalten.

Die Strahlungshärtung der Deckschicht erfolgt dabei vorzugsweise nach dem Tiefziehvorgang und besonders bevorzugt nach dem Hinterspritzten der Folie.

Die Strahlungshärtung erfolgt mit energiereichem Licht, z.B. UV-Licht oder Elektronenstrahlen. Die Strahlungshärtung kann bei höheren Temperaturen erfolgen. Bevorzugt ist dabei eine Temperatur oberhalb der Tg des strahlungshärtbaren Bindemittels.

Soweit auch Vernetzer enthalten sind, die eine zusätzliche thermische Vernetzung bewirken, z.B. Isocyanate, kann z.B. gleichzeitig oder auch nach der Strahlungshärtung die thermische Vernetzung durch Temperaturerhöhung auf bis zu 150°C, vorzugsweise bis zu 130°C durchgeführt werden.

### Anwendungsgebiete und Vorteile

Die Folien können zur Beschichtung von Formkörpern verwendet werden. Dabei sind beliebige Formkörper zugänglich. Besonders bevorzugt werden die Folien zur Beschichtung von Formkörpern verwendet, bei denen es auf sehr gute Oberflächeneigenschaften, eine hohe Witterungsbeständigkeit sowie gute UV-Beständigkeit ankommt. Die erhaltenen Oberflächen sind zudem sehr kratzfest und haftfest, so daß eine Zerstörung der Oberflächen durch Zerkratzen oder Ablösen der Oberflächen zuverlässig verhindert wird. Somit sind Formkörper zur Verwendung im Außenbereich außerhalb von Gebäuden ein bevorzugtes Anwendungsgebiet. Insbesondere werden die Folien zur Beschichtung von Kraftfahrzeugteilen, eingesetzt, z.B. kommen Kotflügel, Türverkleidungen, Stoßstangen, Spoiler, Schürzen, wie auch Außenspiegel in Betracht.

### Beispiele:

### I Synthese eines strahlungshärtbaren Lacks:

426,2 g Isopropylidendicyclohexanol wurden in 566,3 g Hydroxyethylacrylat bei 60°C unter Rühren grob dispergiert. Zu dieser Suspension wurden 1695,2 g eines Isocyanurat von Hexamethylendiisocyanat, 1,34 g Hydrochinonmonomethylether, 2,69 g 1,6-ditert-Butyl-para-Kresol und 0,134 g Phenothiazin gegeben. Nach der Zugabe von 0,538 g Dibutylzinndilaurat erwärmt sich der Ansatz innerhalb von 20 Minuten auf 93°C. Nach Abkühlung auf 75°C werden 300 g Aceton zudosiert. Nachdem der NCO-Wert auf 0,66 % gefallen war, wurde nochmals 370 g Aceton zugegeben, bevor 14,87 g Methanol zugetropft wurde. Danach wurde bei 60°C so lange gerührt bis der NCO-Wert auf 0 gesunken war. Das Harz wurde mit einem geeigneten Photoinitiator versetzt, auf eine Luran S 797 Hinterspritzfolie aufgetragen und bei 100°C belichtet. Die Bleistifthärte der Folien wurde bestimmt nach ASTM D 3363. Bleistifthärte der Lackierten Folie: 2H

### Vergleich: Bleistifthärte der unbehandelten Hinterspritzfolie (Luran S 797): B

Vergleich: Bleistifthärte der Hinterspritz-Schutzfolie
(Lucryl G 87): weicher als 6B

Zwei ungehärtete Acrylierte Polyacrylate mit unterschiedlichen Tg Werten sowie das ungehärtete Urethanacrylat wurden auf eine Luran S Trägerfolie aufgetragen und bei erhöhter Temperatur tiefgezogen. Nach dem Tiefziehen wurden die Folien bei 100°C belichtet.

### Härte der Folien:

| | |
|---|---|
| Urethanacrylat | 2H |
| Binderharz (Tg (vor Belichtung)=46°C) | 3H |
| Binderharz (Tg (vor Belichtung)=-6°C) | H |

## Patentansprüche

1. Verwendung einer strahlungshärtbaren Verbundschichtplatte oder -folie aus mindestens einer Substratschicht und einer Deckschicht zur Beschichtung von Formteilen, **dadurch gekennzeichnet, daß** die Deckschicht aus einer strahlungshärtbaren Masse besteht, die ein Bindemittel mit einer Glasübergangstemperatur oberhalb 40°C enthält bei dem es sich um
i) Polymere mit ethylenisch ungesättigten Gruppen oder
ii) Mischungen von i) mit ethylenisch ungesättigten, niedermolekularen Verbindungen handelt.

2. Verwendung einer strahlungshärtbaren Verbundschichtplatte oder -folie gemäß Anspruch 1, wobei die Deckschicht transparent ist.

3. Verwendung einer strahlungshärtbaren Verbundschichtplatte oder -folie gemäß Anspruch 1 oder 2, wobei sich zwischen der Substratschicht und der Deckschicht noch eine farbgebende Zwischenschicht befindet.

4. Verwendung einer strahlungshärtbaren Verbundschichtplatte oder -folie gemäß einem der Ansprüche 1 bis 3, wobei sich zwischen der farbgebenden Zwischenschicht und der Deckschicht noch eine Schicht aus Polymethylmethacrylat befindet.

5. Verwendung einer strahlungshärtbaren Verbundschichtplatte oder -folie gemäß einem der Ansprüche 1 bis 4, wobei die strahlungshärtbare Masse unvernetzt ist.

6. Verwendung einer strahlungshärtbaren Verbundschichtplatte oder -folie gemäß einem der Ansprüche 1 bis 5, wobei die strahlungshärtbare Masse Polymere mit ethylenisch ungesättigen Gruppen, gegebenenfalls im Gemisch mit niedermolekularen, strahlungshärtbaren Verbindungen oder Mischungen von gesättigten, thermoplastischen Polymeren mit ethylenisch ungesättigten Verbindungen enthält.

7. Verwendung einer strahlungshärtbaren Verbundschichtplatte oder -folie gemäß einem der Ansprüche 1 bis 6, wobei es sich bei der Substratschicht um eine Schicht aus thermoplastischen Polymeren, insbesondere Polymethylmethacrylate, Polybutylmethacrylate, Polyurethane, Polyethylenterephthalate, Polybutylenterephthalate, Polyvinylidenfluride, Polyvinylchloride, Polyester, Polyolefine, Polyamide, Polycarbonate, Acrylnitrilbutadienstyrolpolymere (ABS), Acrylstryolacrylnitrilcopolymere (ASA), Acrylnitrilethylenpropylendienstryolcopolymere (A-EPDM), Polyetherimide, Polyetherketone, Polyphenylensulfide, Polyphenylenether oder deren Mischungen handelt.

8. Verfahren zur Herstellung der strahlungshärtbaren verbundschichtplatte oder -folie gemäß einem der Ansprüche 1 bis 7, **dadurch gekennzeichnet, daß** die strahlungshärtbare Masse extrudiert wird.

9. Verfahren zur Herstellung der strahlungshärtbaren Verbundschichtplatte und -folie nach Anspruch 8, **dadurch gekennzeichnet, daß** die strahlungshärtbare Masse.und mindestens eine weitere Schicht coextrudiert werden.

10. Verfahren zur Herstellung von beschichteten Formteilen, insbesondere Kraftfahrzeugteilen, **dadurch gekennzeichnet, daß** die strahlungshärtbare Verbundschichtplatte oder -folie gemäß einem der Ansprüche 1 bis 7 auf die Formteile aufgeklebt wird und danach die Deckschicht durch Strahlung gehärtet wird.

11. Verfahren zur Herstellung von beschichteten Formteilen aus Kunststoff, insbesondere Kraftfahrzeugteilen, **dadurch gekennzeichnet, daß** die strahlungshärtbare Verbundschichtplatte oder .-folie gemäß einem der Ansprüche 1 bis 7 in einem Tiefziehwerkzeug tiefgezogen und die Rückseite der Substratschicht mit der Kunststoffmasse hinterspritzt wird, wobei die Strahlungshärtung der Deckschicht nach dem Tiefziehvorgang oder nach dem Hinterspritzen erfolgt.

12. Beschichtete Formteile, erhältlich nach einem Verfahren gemäß Anspruch 10 oder 11.

13. Strahlungshärtbare Verbundschichtplatte oder -folie aus mindestens einer Substratschicht und einer Deckschicht bestehend aus einer strahlungshärtbaren Masse, die ein Bindemittel mit einer Glasübergangstemperatur oberhalb 40°C enthält bei dem es sich um
i) Polymere mit ethylenisch ungesättigten Gruppen oder
ii) Mischungen von i) mit ethylenisch ungesättigten, niedermolekularen Verbindungen handelt,
**dadurch gekennzeichnet, dass** sich zwischen der Substratschicht und der Deckschicht noch eine farbgebende Zwischenschicht befindet.

14. Strahlungshärtbare Verbundschichtplatte oder -folie gemäß Anspruch 13, wobei sich zwischen der farbgebenden Zwischenschicht und der Deckschicht noch eine Schicht aus Polymethylmethacrylat befindet.

15. Strahlungshärtbare Verbundschichtplatte oder -folie gemäß einem der Ansprüche 13 oder 14, wobei die strahlungshärtbare Masse Polymere mit ethylenisch ungesättigen Gruppen, gegebenenfalls im Gemisch mit niedermolekularen, Strahlungshärtbaren Verbindungen enthält.

## Claims

1. The use of a radiation-curable composite layered sheet or film comprising at least one substrate layer and one outer layer for coating moldings, wherein the outer layer is composed of a radiation-curable composition which comprises a binder having a glass transition temperature of more than 40°C, the binder being
i) polymers containing ethylenically unsaturated groups or
ii) mixtures of i) with ethylenically unsaturated compounds of low molecular mass

2. The use of a sheet or film according to claim 1, wherein the outer layer is transparent.

3. The use of a sheet or film according to claim 1 or 2, wherein there is additionally a coloring interlayer between the substrate layer and the outer layer.

4. The use of a sheet or film according to any of claims 1 to 3, wherein there is additionally a layer of polymethyl methacrylate between the coloring interlayer and the outer layer.

5. The use of a sheet or film according to any of claims 1 to 4, wherein the radiation-curable composition is in the noncrosslinked state.

6. The use of a sheet or film according to any of claims 1 to 5, wherein the radiation-curable composition comprises polymers containing ethylenically unsaturated groups, optionally as a mixture with low molecular mass, radiation-curable compounds, or mixtures of saturated, thermoplastic polymers with ethylenically unsaturated compounds.

7. The use of a sheet or film according to any of claims 1 to 6, wherein the substrate layer comprises a layer of thermoplastic polymers, particularly polymethyl methacrylates, polybutyl methacrylates, polyurethanes, polyethylene terephthalates, polybutylene terephthalates, polyvinylidene fluorides, polyvinyl chlorides, polyesters, polyolefins, polyamides, polycarbonates, acrylonitrile-butadiene-styrene (ABS) polymers, acrylic-styrene-acrylonitrile (ASA) copolymers, acrylonitrile-ethylene-propylene-diene-styrene copolymers (A-EPDM), polyether imides, polyether ketones, polyphenylene sulfides, polyphenylene ethers or mixtures thereof.

8. A process for producing the radiation-curable composite layered sheet or film according to any of claims 1 to 7, which comprises extruding the radiation-curable composition.

9. The process for producing the radiation-curable composite layered sheet and film according to claim 8, wherein the radiation-curable composition and at least one further layer are coextruded.

10. A process for producing coated moldings, especially motor vehicle parts, which comprises adhesively bonding the radiation-curable composite layered sheet or film according to any of claims 1 to 7 to said moldings and then curing the outer layer by means of radiation.

11. A process for producing coated polymer moldings, especially motor vehicle parts, which comprises thermoforming the radiation-curable composite layered sheet or film according to any of claims 1 to 7 in a thermoforming mold and injection-backmolding the reverse of the substrate layer with the polymer composition, the radiation-curing of the outer layer taking place after the thermoforming operation or after injection backmolding.

12. A coated molding obtainable by a process according to claim 10 or 11.

13. A sheet or film comprising at least one substrate layer and one outer layer composed of a radiation-curable composition which comprises a binder having a glass transition temperature of more than 40°C, the binder being
i) polymers containing ethylenically unsaturated groups or
ii) mixtures of i) with ethylenically unsaturated compounds of low molecular mass,
wherein there is additionally a coloring interlayer between the substrate layer and the outer layer.

14. The sheet or film according to claim 13, wherein there is additionally a layer of polymethyl methacrylate between the coloring interlayer and the outer layer.

15. The sheet or film according to either of claims 13 and 14, wherein the radiation-curable composition comprises polymers containing ethylenically unsaturated groups, optionally as a mixture with low molecular mass, radiation-curable compounds.

## Revendications

1. Utilisation d'une plaque ou d'une feuille composite durcissable par rayonnement, constituée d'au moins une couche de substrat et une couche de revêtement afin d'enduire des pièces moulées, **caractérisée en ce que** la couche de revêtement est constituée d'une masse durcissable par rayonnement qui comprend un liant présentant une température de vitrification au-dessus de 40°C, le liant étant
i) des polymères avec des groupes éthylèniquement insaturés, ou
ii) des mélanges de i) avec des composés éthylèniquement insaturés de faible masse moléculaire.

2. Utilisation d'une plaque ou d'une feuille composite durcissable par rayonnement selon la revendication 1, dans laquelle la couche de revêtement est transparente.

3. Utilisation d'une plaque ou d'une feuille composite durcissable par rayonnement selon la revendication 1 ou 2, dans laquelle une couche intermédiaire colorante se trouve entre la couche de substrat et la couche de revêtement.

4. Utilisation d'une plaque ou d'une feuille composite durcissable par rayonnement selon l'une des revendications 1 à 3, dans laquelle une couche de polyméthacrylate de méthyle se trouve entre la couche intermédiaire colorante et la couche de revêtement.

5. Utilisation d'une plaque ou d'une feuille composite durcissable par rayonnement selon l'une des revendications 1 à 4, dans laquelle la masse durcissable par rayonnement n'est pas réticulée.

6. Utilisation d'une plaque ou d'une feuille composite durcissable par rayonnement selon l'une des revendications 1 à 5, dans laquelle la masse durcissable par rayonnement comprend des polymères avec des groupes éthylèniquement insaturés, le cas échéant mélangés à des composés de faible masse moléculaire et durcissables par rayonnement, ou des mélanges de polymères saturés et thermoplastiques avec des composés éthylèniquement insaturés.

7. Utilisation d'une plaque ou d'une feuille composite durcissable par rayonnement selon l'une des revendications 1 à 6, dans laquelle la couche de substrat est une couche constituée de polymères thermoplastiques, en particulier de polyméthacrylate de méthyle, de polyméthacrylate de butyle, de polyuréthanne, de téréphtalate de polyéthylène, de fluorure de polyvinylidène, de polychlorure de vinyle, de polyester, de polyoléfine, de polyamide, de polycarbonate, de polymère acrylonitrile butadiène styrène (ABS), de copolymère acrylonitrile styrène acrylate (ASA), de copolymère acrylonitrile éthylène-propylène-diène styrène (A-EPDM), de polyéthérimide, de polyéthercétone, de polyphénylène sulfide, de polyphénylène éther, ou de leurs mélanges.

8. Procédé pour la préparation de la plaque ou de la feuille composite durcissable par rayonnement selon l'une des revendications 1 à 7, **caractérisé en ce que** la masse durcissable par rayonnement est extrudée.

9. Procédé pour la préparation de la plaque ou de la feuille composite durcissable par rayonnement selon la revendication 8, **caractérisé en ce que** la masse durcissable par rayonnement et au moins une autre couche sont coextrudées.

10. Procédé pour la préparation de pièces, moulées enduites, en particulier de pièces de véhicule, **caractérisé en ce que** la plaque ou la feuille composite durcissable par rayonnement est collée, selon l'une des revendications 1 à 7, sur les pièces moulées, en qu'ensuite la couche de revêtement est durcie par rayonnement.

11. Procédé pour la préparation de pièces moulées en plastique enduites, en particulier de pièces de véhicule, **caractérisé en ce que** la plaque ou la feuille composite durcissable par rayonnement est emboutie dans un outil à emboutir, selon l'une des revendications 1 à 7, et que la face arrière de la couche de substrat est surmoulée avec la masse de plastique, dans lequel le durcissement par rayonnement de la couche de revêtement est effectué après le processus d'emboutissage ou après le surmoulage.

12. Pièces moulées enduites, pouvant être obtenues grâce à un procédé selon la revendication 10 ou 11.

13. Plaque ou feuille composite durcissable par rayonnement, faite d'au moins une couche de substrat et une couche de revêtement comprenant une masse durcissable par rayonnement, qui comprend un liant présentant une température de vitrification au-dessus de 40°C, le liant étant
i) des polymères avec des groupes éthylèniquement insaturés, ou
ii) des mélanges de i) avec des composés éthylèniquement insaturés de faible masse moléculaire, **caractérisée en ce qu'**une couche intermédiaire colorante se trouve entre la couche de substrat et la couche de revêtement.

14. Plaque ou feuille composite durcissable par rayonnement selon la revendication 13, dans laquelle une couche de polyméthacrylate de méthyle se trouve entre la couche intermédiaire colorante et la couche de revêtement.

15. Plaque ou feuille composite durcissable par rayonnement selon les revendications 13 ou 14, dans laquelle la masse durcissable par rayonnement comprend des polymères avec des groupes éthylèniquement insaturés, le cas échéant mélangés à des composés de faible masse moléculaire et durcissables par rayonnement.
